# EUROPÄISCHE PATENTANMELDUNG

(11) **EP 1 439 126 A1**
(43) Veröffentlichungstag der Anmeldung: **21.07.2004**
(21) Anmeldenummer: 03024274.7
(22) Anmeldetag: 23.10.2003
(51) Int. Cl.: B65B 35/58, B65B 35/36, B65G 47/244, B65G 47/84

(54) **Vorrichtung zum Ausrichten und Verteilen von Gegenständen**

(30) Priorität: 15.01.2003 DE 10301178
(71) Anmelder: KHS Maschinen- und Anlagenbau Aktiengesellschaft, 44143 Dortmund (DE)
(72) Erfinder: Wagner, Stefan, 46509 Xanten (DE); Kuhlmann, Hans-Peter, 46509 Xanten (DE); Ripkens, Hans-Gerd, 47574 Goch (DE)

(57) **Zusammenfassung**

Vorgestellt wird eine Vorrichtung (1) zum Ausrichten und Verteilen von in mindestens einer Reihe antransportierten, gleichen Abstand zueinander aufweisenden Gegenständen (19), insbesondere solche quaderförmiger Art; dabei ist vorgesehen, dass eine Mehrzahl von an endlos in seitlich neben den antransportierten Gegenständen (19) angeordneten Gestellen (2) umlaufenden Förderelementen (3) angeschlagenen Mitnehmerstäben (5) an denen jeweils mindestens ein entlang des Mitnehmerstabes (5) mittels eines Schlittens (6) verschiebbar gelagertes Greifelement (7) um eine vertikale Achse (16) verdrehbar angeordnet ist, welches in relativ zu den Förderelementgestellen (2) ortsfest angeordneten Führungsschienen (10,11) geführt ist, wobei die Führungsschienen (10,11) aus einer Stellung parallel zueinander in eine in einem spitzen Winkel sich öffnende Stellung verstellbar und gemeinsam quer zur Transportrichtung um den Scheitelpunkt dieses Winkels verschwenkbar sind.

## Beschreibung

Die Erfindung betrifft eine Vorrichtung zum Ausrichten und Verteilen von in mindestens einer Reihe antransportierten, gleichen Abstand zueinander aufweisenden Gegenständen, insbesondere solche quaderförmiger Art.

Eine derartige Vorrichtung soll beispielsweise einer Verpackungsmaschine nachgeschaltet sein, die Dosen, Flaschen etc. in Gebinden zusammenfasst und diese Packungsgebinde dann weiteren Bearbeitungsstationen und/oder Palettiervorrichtungen zuführt, beispielsweise in Form von Kartons.

Hierzu ist es erforderlich, dass die Packungen in einer definierten Orientierung (in Längsrichtung oder beispielsweise um 90° gedreht) sowie in bestimmter Verteilung (einbahnig oder zweibahnig) diesen weiteren Stationen zugeführt werden.

Bislang geschieht dies in zwei Vorrichtungen, wobei in einer die erforderliche Drehung und in der anderen die entsprechende Verteilung durchgeführt wird.

Der Erfindung liegt daher die Aufgabe zugrunde, eine Vorrichtung der eingangs genannten Art so auszubilden, dass das Orientieren und die Verkeilung gleichzeitig durchgeführt werden können und hierdurch eine kompakte Bauform der Vorrichtung ermöglicht wird.

Zur Lösung dieser Aufgabe schlägt die Erfindung eine Mehrzahl von an endlos in seitlich neben den antransportierten Gegegenständen angeordneten Gestellen umlaufenden Förderelementen angeschlagenen Mitnehmerstäben vor, an denen jeweils mindestens ein entlang des Mitnehmerstabes mittels eines Schlittens verschiebbar gelagertes Greifelement um eine vertikale Achse verdrehbar angeordnet ist, welches in zwei relativ zu den Förderelementgestellen ortsfest angeordneten Führungsschienen geführt ist, wobei die Führungsschienen aus einer Stellung parallel zueinander in eine in einem spitzen Winkel sich öffnende Stellung verstellbar und gemeinsam quer zur Transportrichtung um den Scheitelpunkt dieses Winkels verschwenkbar sind.

Hierbei bewirkt die Aufspreizung der Führungsschienen die Verdrehung des Greifers, während die Verschwenkbewegung der beiden Führungsschienen gemeinsam die Verteilung der Packungen nach links oder rechts ermöglicht.

Sind die Führungsschienen parallel zueinander eingestellt, wird der Greifer und somit auch die Packung nicht gedreht.

Durch die erfindungsgemäße Vorrichtung, bei der auf kurzem Weg sowohl die Drehung (optional) als auch die Verteilung geschieht, ist es auf einfache Art und Weise möglich, alle Optionen (drehen und verteilen, nur drehen, nur verteilen) realisieren zu können.

Die Mitnehmerstäbe, an denen sich die Greifer befinden (in der Regel ist ein Greifer einem Mitnehmerstab zugeordnet) sind vorteilhafterweise gemäß Anspruch 2 an Ketten angeschlagen, die die in Anspruch 1 genannten Förderelemente darstellen.

Diese Mitnehmerstäbe sind gemäß Anspruch 3 in in den Förderelementgestellen angeordneten Führungen geführt, derart, dass die Mitnehmerstäbe und damit auch die daran angeordneten Greifelemente stets in derselben Orientierung parallel zur Transportebene sind.

Das geschieht vorteilhafterweise dadurch, dass an den Enden der Mitnehmerstäbe zwei horizontal versetzt zueinander angeordnete Führungsstifte vorgesehen sind, die in entsprechenden Führungen in den Förderelementgestellen geführt sind, derart, dass diese horizontal versetzte Anordnung immer beibehalten werden kann.

So geführt gelangt der Greifer im Einlaufbereich der Packungen von schräg oben mit seinen Greiffingern an die jeweilige Packung, wodurch die Packungen formschlüssig übernommen werden. Im weiteren Verlauf wird durch die aktuelle Stellung der Führungsschienen der Greifer geradeaus bewegt, wobei eine Drehung um beispielsweise 90° stattfindet. Die Führungsschienen können aber auch so eingestellt sein, dass die übernommene Packung lediglich zur Seite verteilt wird, während keine Drehung stattfindet. Als dritte Möglichkeit ist natürlich vorgesehen, dass sowohl eine seitliche Verteilung als auch eine Drehung stattfindet.

Anspruch 4 gibt eine konstruktiv einfache Möglichkeit an, wie der Drehvorgang zwangsläufig erfolgen kann.

Es wird vorgeschlagen, dass das Greifelement mittels eines Hebelsystems, von dem ein Ende in der einen Führungsschiene geführt ist und das andere am Greifelement angelenkt ist und in der anderen Führungsschiene ein fest mit dem Schlitten verbundener Führungsstift geführt ist, abhängig vom Öffnungswinkel der Führungsschienen um einen Winkel zwischen 0°und > 90° verdrehbar ist.

Gelangt der Mitnehmerstab bzw. der daran angeordnete Greifer in den Einlaufbereich der Vorrichtung, d.h. in den Einlaufbereich der beiden Führungsschienen, gelangen die geführten Elemente (einerseits der Führungsstift am Ende des Hebelsystems und andererseits der Führungsstift am Schlitten) in die jeweilige Führungsschiene. Weist das Führungsschienenpaar einen Öffnungswinkel > 0° auf, werden die beiden Führungsstifte im Verlauf des Transportes relativ zueinander auseinander bewegt wodurch dann der Hebel ein Drehmoment auf den Greifer ausübt und, abhängig vom Öffnungswinkel, eine Verdrehung von 0 bis mehr als 90° verursacht.

Die Angabe >90° bezieht sich darauf, dass ein Verdrehwinkel von exakt 90° nicht unbedingt immer erwünscht ist.

Für den weiteren Transport der verteilten und orientierten Packungen stehen mitunter sogenannte Kurvenbänder zur Verfügung. Wenn die Packungen auf diesen Kurvenbändern transportiert werden, wird die ursprünglich gewünschte Orientierung in der Regel etwas verfälscht. Um diesem Umstand entgegentreten zu können, werden die Packungen bei der Orientierung um einen Winkel, der auch kleiner oder größer als 90° sein kann, eingestellt, damit die "spätere Verfälschung" hierdurch ausgeglichen wird.

Als besonders einfach hat es sich herausgestellt, dieses Hebelsystem als Schubkurbelsystem auszubilden.

Zur Einstellung des Öffnungswinkels der Führungsschienen für die Greifelemente ist gemäß Anspruch 6 ein Getriebe vorgesehen, welches gemäß Anspruch 7 in einer bevorzugten Ausführungsform als Spindel-Spindelmutter-Getriebe ausgebildet ist, wobei gemäß Anspruch 8 dieses Getriebe mittels einer Handkurbel handbetätigbar oder aber gemäß Anspruch 9 mittels eines Schrittmotors betätigbar ist.

Genauso wird auch die Verschwenkbewegung des Führungsschienenpaares als Einheit mittels eines Getriebes verwirklicht, beispielsweise gemäß Anspruch 10 mittels einer Spindel.

Die erfindungsgemäße Vorrichtung wurde bisher lediglich für eine einbahnige Betriebsweise beschrieben, d.h., dass in einer Reihe antransportierte Packungen auch lediglich einbahnig weitergeleitet werden.

Es wird jedoch kundenseitig auch gewünscht, dass eine zweibahnige Aufteilung durch die erfindungsgemäße Vorrichtung erzielt werden soll.

Diese Aufgabe wird gemäß Anspruch 11 dadurch gelöst, dass zwei Führungsschienenpaare für Greifelemente vorgesehen sind, die spiegelbildlich zueinander angeordnet sind.

Die in einer Reihe antransportierten Packungen werden mit Hilfe dieser Vorrichtungsvariante dann abwechselnd von dem einen Führungsschienenpaar und von dem anderen Führungsschienenpaar orientiert bzw. verteilt.

Hierzu ist gemäß Anspruch 12 vorgesehen, dass aufeinanderfolgende Mitnehmerstäbe jeweils einem unterschiedlichen Führungsschienenpaar zugeordnet sind.

Hierbei sind die Führungsstifte der Greifer so angeordnet, dass z.B. der erste, dritte, fünfte bzw. jeder ungerade nummerierte Greifer entweder geradeaus verfährt oder die Packung nach links verteilt, während der zweite, vierte bzw. jeder gerade nummerierte Greifer ebenfalls geradeaus verfährt oder aber die Packung nach rechts verteilt.

Die Hauptvorteile der erfindungsgemäßen Vorrichtung können somit folgendermaßen zusammengefasst werden:
Kompakte Bauform (d.h. Drehen und Verteilen können gleichzeitig stattfinden),
permanenter Formschluss zur Packung während des Dreh- und Verteilvorganges,
freie Positionierbarkeit der Packungen bei Ein- und Mehrbahnigkeit.

Ein weiterer großer Vorteil der erfindungsgemäßen Vorrichtung ist in ihrer Umkehrbarkeit zu sehen. Das heißt, dass beispielsweise in zwei Reihen antransportierte Packungen praktisch von der Rückseite der Vorrichtung übernommen werden können und dann zu einer einbahnigen Reihe zusammengefasst werden. Als Perspektive ergibt sich hierbei auch, dass sogar auch eine dreibahnige Zufuhr mit einem zweibahnigen Abtransport unter Berücksichtigung der Drehoption vorstellbar ist.

Die Erfindung wird im folgenden anhand von Zeichnungen dargestellt und näher erläutert.

Es zeigen:
- Fig.1: in perspektivischer Darstellung die erfindungsgemäße Vorrichtung in abgebrochener Darstellung,
- Fig.2: Vorrichtung gemäß Figur 1 in Draufsicht
- Fig.3: Vorrichtung gemäß den Figuren 1 und 2 in Seitenansicht und
- Fig.4: Vorrichtung gemäß den Figuren 1 bis 3 in Vorderansicht

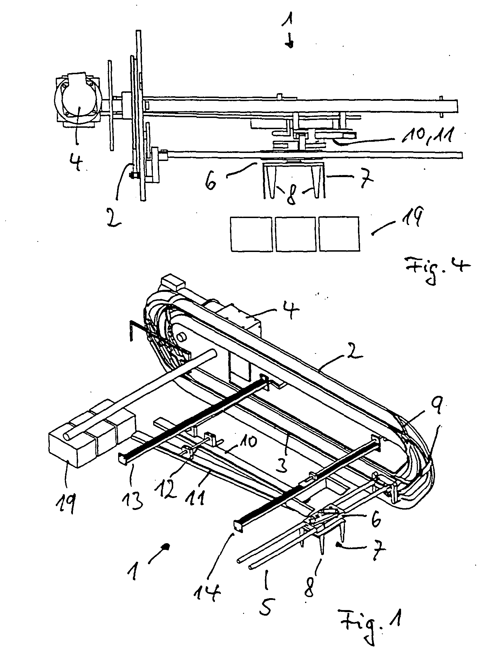

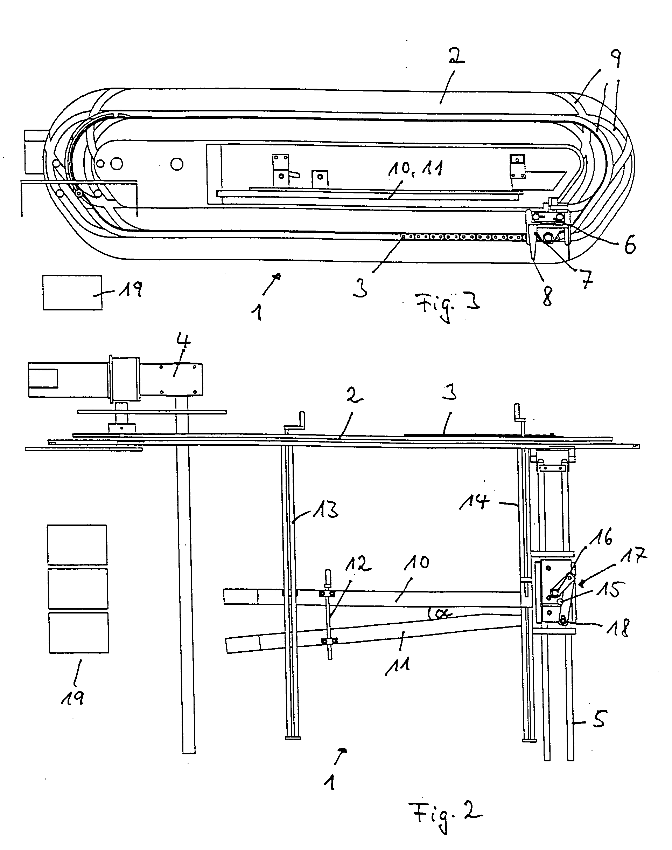

In den Figuren 1 bis 4 ist die erfindungsgemäße Vorrichtung in ihren wesentlichen Teilen dargestellt und allgemein mit dem Bezugszeichen 1 versehen. Aus Übersichtlichkeitsgründen ist eine Seitenführung weggelassen worden.

Die Vorrichtung besteht aus links und rechts von einem nicht näher dargestellten Transportband angeordneten Förderelementgestellen 2, in denen jeweils eine Kette 3 endlos umlaufend geführt ist. Der Antrieb der Ketten erfolgt über einen Motor 4 den Ketten 3 angeschlagen sind Mitnehmerstäbe 5, von denen aus Übersichtlichkeitsgründen lediglich einer dargestellt ist. Der Mitnehmerstab 5 besteht aus zwei parallel zueinander angeordneten Schienen, auf denen ein Schlitten 6 in Schienenlängsrichtung verschiebbar gelagert ist. An dem Schlitten 6 ist ein nach unten zum Transportband weisendes Greifelement 7 um eine vertikale Achse drehbar angeordnet. Das Greifelement 7 weist an seinen Eckpunkten angeformte Finger 8 auf.

Die Mitnehmerstäbe 5 weisen an ihren Enden zwei Führungsstifte auf, die horizontal ein wenig zueinander versetzt sind. Die Führungsstifte werden in Führungssbahnen 9 geführt, die so verlaufen, dass die horizontale Orientierung der Mitnehmerstäbe 5 und damit auch des Greifelementes 7 bei jedem Umlauf erhalten bleibt.

Ortsfest zu den Förderelementgestellen 2 sind oberhalb der Transportebene zwei Führungsschienen 10 und 11 angeordnet, deren Führungsnut zur Transportebene zeigt. Die Führungsschienen 10 und 11 sind mittels einer handbetätigten Spindel 12 aus einer Stellung parallel zueinander in eine Winkelstellung α aufspreizbar. Ein zusätzlicher Spindeltrieb 13 sorgt dafür, dass das Führungsschienenpaar 10, 11 in seiner Gesamtheit um den Schnittpunkt der Führungsschienen 10 und 11 herum verschwenkbar ist.

Eine weitere Spindel 14 kann vorgesehen sein, um auch die Lage dieses Drehpunkts zu verändern.

Auf dem Schlitten 6 ist ein Führungsstift 15 vorgesehen sowie ein Gelenkpunkt 16,der durch die Drehachse des Greifelements 7 gebildet ist und an dem ein Hebelsystem 17 angelenkt ist, welches als Schubkurbel ausgebildet ist. Das freie Ende des Kniehebels 18 weist ebenfalls einen Führungsstift auf.

Der Führungsstift 15 ist der Führungsschiene 10 und der Führungsstift 18 der Führungsschiene 11 zugeordnet.

In der Darstellung ist der Zustand gezeigt, in dem der Schlitten 6 mit dem Greifer 7 von schräg oben kommend in den Einlaufbereich der Packung 19 eintaucht. Die Finger 8 des Greifelements 7 greifen die Packung 19 formschlüssig und transportieren sie unterhalb der Führungsschienen 10,11 weiter. Dabei fahren die Führungsstifte 15 und 18 in die ihnen zugeordneten Führungsschienen 10, 11. Im dargestellten Beispiel werden dabei die Führungsstifte 15 und 18 infolge des Winkels α auseinandergezogen, wodurch das Hebelsystem 17 ein Drehmoment auf den Greifer 7 ausübt, wodurch der Greifer 7, das Greifelement 7 und die gegriffene Packung 19 um einen vom Winkel α abhängigen Winkel verdreht wird. Dabei ist die Vorwärtsbewegung der Packung 19 parallel zur Transportrichtung.

Durch Verschwenken des Führungsschienenpaares 10, 11 mittels der Spindel 13 kann bei dem eben dargestellten Vorgang auch eine Verteilung, d.h. eine seitliche Verschiebung der Packung 19 vollzogen werden.

Durch Spiegelung des Führungsschienenpaares 10, 11 und der Zuordnung jedes zweiten Mitnehmerstabes 5 dem jeweils gleichen Führungsschienenpaar 10, 11 ist es möglich, aus einem einreihig ankommenden Produktstrom einen zweibahnigen Abtransport zu verwirklichen.

Mit Hilfe der eben dargestellten Vorrichtung ist auch der umgekehrte Fall möglich, dass nämlich die Verteilung bzw. Zusammenführung unter gleichzeitiger Drehung der Packung in umgekehrter Richtung erfolgen kann, so dass aus einem mehrbahnig ankommenden Produktstrom ein einbahniger Abtransport erfolgen kann.

## Patentansprüche

1. Vorrichtung zum Ausrichten und Verteilen von in mindestens einer Reihe antransportierten, gleichen Abstand zueinander aufweisenden Gegenständen, insbesondere solche quaderförmiger Art, **gekennzeichnet durch** eine Mehrzahl von an endlos in seitlich neben den antransportierten Gegegenständen angeordneten Gestellen (2) umlaufenden Förderelementen (3) angeschlagenen Mitnehmerstäben (15), an denen jeweils mindestens ein entlang des Mitnehmerstabes (5) mittels eines Schlittens (6) verschiebbar gelagertes Greifelement (7) um eine vertikale Achse (16)verdrehbar angeordnet ist, welches in relativ zu den Förderelementgestellen ortsfest angeordneten Führungsschienen geführt ist, wobei die Führungsschienen aus einer Stellung parallel zueinander in eine in einem spitzen Winkel sich öffnende Stellung verstellbar und gemeinsam quer zur Transportrichtung um den Scheitelpunkt dieses Winkels verschwenkbar sind.

2. Vorrichtung nach Anspruch 1, **dadurch gekennzeichnet, dass** die Förderelemente Ketten sind.

3. Vorrichtung nach Anspruch 1 oder 2, **dadurch gekennzeichnet, dass** die Mitnehmerstäbe (5) in in den Förderelementgestellen (2) angeordneten Führungen (9) geführt sind, derart, dass die Mitnehmerstäbe (5) und damit auch die daran angeordeneten Greifelemente (7) stets in derselben Orientierung parallel zur Transportebene sind.

4. Vorrichtung nach einem der Ansprüche 1 bis 3, **dadurch gekennzeichnet, dass** das Greifelement (7) mittels eines Hebelsystems(17) , von dem ein Ende (18) in der einen Führungsschiene (11) geführt und das andere am Greifelement (7) angelenkt ist und in der anderen Führungsschiene (10) ein fest mit dem Schlitten (6) verbundener Führungsstift (15) geführt ist, abhängig vom Öffnungswinkel der Führungsschienen (10,11) um einen Winkel zwischen 0° und > 90° verdrehbar ist.

5. Vorrichtung nach einem der Ansprüche 1 bis 4, **dadurch gekennzeichnet, dass** das Hebelsystem (17) als Schubkurbel ausgebildet ist..

6. Vorrichtung nach einem der Ansprüche 1 bis 5, **dadurch gekennzeichnet, dass** der Öffnungswinkel der Führungsschienen (10,11) für die Greifelemente (7) mittels eines Getriebes (12) verstellbar ist.

7. Vorrichtung nach Anspruch 6, **dadurch gekennzeichnet, dass** das Getriebe (12) ein Spindel-Spindelmutter-Getriebe ist.

8. Vorrichtung nach Anspruch 6 oder 7, **dadurch gekennzeichnet, dass** das Getriebe (12) handbetätigt ist.

9. Vorrichtung nach Anspruch 6 oder 7, **dadurch gekennzeichnet, dass** das Getriebe (12) mittels eines Motors betätigbar ist.

10. Vorrichtung nach einem der Ansprüche 1 bis 9, **dadurch gekennzeichnet, dass** die Verschwenkbewegung der Führungsschienen (10,11) für die Greifelemente (7) mittels einer Spindel (13) quer zur Transportrichtung erfolgt.

11. Vorrichtung nach einem der Ansprüche 1 bis 10, **dadurch gekennzeichnet, dass** zwei Führungsschienenpaare (10,11) für Greifelemente (7) vorgesehen sind, die spiegelbildlich zueinander angeordnet sind.

12. Vorrichtung nach Anspruch 11, **dadurch gekennzeichnet, dass** aufeinanderfolgende Mitnehmerstäbe (5) jeweils einem unterschiedlichen Führungsschienenpaar (10,11) zugeordnet sind.
